Europäisches Patentamt

European Patent Office

Office européen des brevets

(11) Veröffentlichungsnummer: **0 270 850 B1**

(12) **EUROPÄISCHE PATENTSCHRIFT**

(45) Veröffentlichungstag der Patentschrift: 23.10.91

(51) Int. Cl.5: **H02H 7/085**

(21) Anmeldenummer: 87116463.8

(22) Anmeldetag: 07.11.87

(54) **Verfahren zum Schutz des Elektroantriebes eines Fahrzeuges gegen Überlast.**

(30) Priorität: 14.11.86 DE 3638946

(43) Veröffentlichungstag der Anmeldung:
15.06.88 Patentblatt 88/24

(45) Bekanntmachung des Hinweises auf die
Patenterteilung:
23.10.91 Patentblatt 91/43

(84) Benannte Vertragsstaaten:
DE FR GB

(56) Entgegenhaltungen:
EP-A- 0 184 339
FR-A- 2 277 513
US-A- 4 490 656

PATENT ABSTRACTS OF JAPAN, Band 10,
Nr. 259 (E-434)[2315], 4. September 1986; &
JP-A-61 85 085 (TOSHIBA CORP.) 30-04-1986

(73) Patentinhaber: Asea Brown Boveri Aktiengesellschaft
Kallstadter Strasse 1
W-6800 Mannheim-Käfertal(DE)

(72) Erfinder: Angelis, Jürgen, Dipl.-Ing.
Chiemseestrasse 7
W-6800 Mannheim 81(DE)
Erfinder: Scherf, Hartmut, Dipl.-Ing.
Ketscher Ring 40
W-6800 Mannheim 81(DE)
Erfinder: Haase, Helmut, Dr.-Ing. Dipl.Ing.
Ahornstrasse 22
W-6947 Laudenbach(DE)

(74) Vertreter: Rupprecht, Klaus, Dipl.-Ing. et al
c/o BBC Brown Boveri Aktiengesellschaft
ZPT Postfach 100351 Kallstadter Strasse 1
W-6800 Mannheim 1(DE)

**Beschreibung**

Die Erfindung betrifft ein Verfahren zum Schutz des Elektroantriebes eines Fahrzeuges, insbesondere eines Elektroautos, gegen Uberlast bei vorübergehendem Uberschreiten der Nennleistung.

Elektrische Antriebe besitzen den Vorteil, daß sie kurzzeitig überlastet werden können, mit anderen Worten ihre Nennleistung (höchstzulässige Dauerleistung) kann für kurze Zeit überschritten werden. Dieser Vorteil wird bei Elektrofahrzeugen betriebsmäßig zum Anfahren und Beschleunigen bzw. zum Befahren von Steigungen und Rampen genutzt. Der Uberlastbetrieb muß jedoch zeitlich eingegrenzt werden, um den elektrischen Antrieb vor Schaden zu schützen.

Ein Uberlastschutz ist durch die thermische Uberwachung aller Antriebskomponenten gegeben. Wenn vorgegebene Temperaturschwellen überschritten werden, wird die Leistung des Antriebes automatisch zurückgenommen. Die Leistungsrücknahme führt zu einer Reduzierung der Fahrgeschwindigkeit. Für den Fahrzeugbetreiber tritt die Geschwindigkeitsreduktion überraschend auf, was zu gefährlichen Verkehrssituationen führen kann.

Eine weitere Möglichkeit für einen Überlastschutz stellt die Überwachung des über die Zeit integrierten Betriebsstromes dar. Beispielsweise ist durch die DE-PS 24 31 540 eine Schaltungsanordnung zum Schutz einer elektrischen Maschine gegen zu hohe Erwärmung bekanntgeworden, bei der durch Begrenzung des Motorstromes die Läufertemperatur so beeinflußt wird, daß die maximal zulässige Temperatur nicht überschritten wird. Hierfür wird das Quadrat des gemessenen Stromes integriert und der Integralwert mit einem der Nennleistung entsprechenden Temperaturwert verglichen. Bei zu hohen Integralwerten wird der Motorstrom reduziert. Wird diese Steuerung bei Elektrofahrzeugen angewendet, so können ebenfalls Überraschungseffekte für den Fahrzeugbetreiber auftreten, da die Fahrzeughöchstgeschwindigkeit von der Vorgeschichte der Fahrleistung abhängt. Eine vorhersehbare, reproduzierbare Fahrleistung (Höchstgeschwindigkeit) ist nicht einstellbar.

Aufgabe der Erfindung ist es, die beschriebenen Nachteile zu vermeiden und ein Verfahren zum Schutz des Elektroantriebes eines Fahrzeuges anzugeben, durch das reproduzierbare Fahrleistungen eingehalten und Überraschungsmomente für den Fahrzeugbetreiber vermieden werden können.

Die Aufgabe wird für ein Verfahren zum Schutz des Elektroantriebes eines Fahrzeuges gegen Überlast dadurch gelöst, daß die Fahrgeschwindigkeit des Fahrzeuges automatisch derart begrenzt wird, daß eine bei Nennbetrieb des Elektroantriebes sich entsprechend den beschleunigungsunabhängigen Fahrwiderständen ergebende Dauergeschwindigkeit nicht überschritten wird. Das Verfahren wird durchgeführt, sobald die Nennleistung bzw. der Nennstrom des Elektroantriebes überschritten wird. Eine kurzzeitige, die Nennleistung übersteigende Leistung wird dabei nur zum Beschleunigen freigegeben.

Die Nennleistung des Elektroantriebes, zu dem die Fahrzeugkomponenten von der Energiequelle bis zu den Antriebsrädern gezählt werden, ist gleich der maximal zulässigen Dauerfahrleistung des Antriebes. Dieser Dauerleistung entspricht eine maximal zulässige Dauergeschwindigkeit des Fahrzeuges, die sich unter den gegebenen beschleunigungsunabhängigen Fahrwiderständen einstellt. Als beschleunigungsunabhängige Fahrwiderstände können z.B. der Rollwiderstand, der Steigungswiderstand, der Luftwiderstand und der Kurvenwiderstand angesehen werden.

Durch das erfindungsgemäße Verfahren ergeben sich reproduzierbare Fahrleistungen, denn die höchste zugelassene Dauergeschwindigkeit geht auf die Leistung des Nennbetriebes und nicht auf die Höchstleistung des Antriebes zurück. Überraschungsmomente durch eine plötzliche, von einem Überlastschutz ausgelöste Leistungs- und Geschwindigkeitsverminderung können vermieden werden.

Eine vorteilhafte Weiterbildung der Erfindung sieht vor, daß aus den aktuellen Fahrwiderständen und der Nennleistung des Elektroantriebes laufend eine maximal zulässige Dauergeschwindigkeit bestimmt wird, welche mit der aktuell vorliegenden Fahrzeuggeschwindigkeit verglichen wird, und daß eine Reduktion der Antriebsleistung (bzw. des Antriebsstromes) auf den Leistungsnennwert (bzw. den Stromnennwert) dann erfolgt, wenn die Fahrzeuggeschwindigkeit gleichgroß oder größer als die zulässige Dauergeschwindigkeit ist.

Ein kurzzeitiges Überschreiten des Leistungs- bzw. Stromnennwertes wird im Falle der Beschleunigung solange zugelassen, bis die dem Nennbetrieb des Antriebes entsprechende Dauergeschwindigkeit erreicht ist. Eine Beschleunigung über diese Dauergeschwindigkeit hinaus kann dann nicht erfolgen.

Vorzugsweise werden zur Ermittlung der maximal zulässigen Dauergeschwindigkeit Meßwerte herangezogen, die unmittelbar im Fahrzeug abgefragt werden können. Dies sind z.B. Antriebsstrom, Antriebsspannung, Drehzahl der elektrischen Maschine und Geschwindigkeit des Fahrzeuges. Die Bestimmung der Dauergeschwindigkeit kann anhand der nachstehend angegebenen Gleichung (12) erfolgen.

Eine weitere vorteilhafte Weiterbildung der Erfindung sieht vor, daß die Fahrzeugleistung dann begrenzt wird, wenn die Differenz zwischen der unter den gegebenen Betriebsbedingungen aufzubringenden elektrischen Leistung und der elektrischen Nennleistung des Antriebes größer wird als die Beschleunigungsleistung des Elektrofahrzeuges dividiert durch den bei Nennleistung vorliegenden Wirkungsgrad des Elektroantriebes.

Eine Begrenzung der Fahrzeugleistung wird auch hier zweckmäßigerweise durch eine Reduktion des Antriebsstromes auf den Nennstrom des elektrischen Antriebes vorgenommen. Auch bei dieser Lösung können alle erforderlichen Meßdaten unmittelbar im Fahrzeug abgefragt werden. Der angesprochene Wirkungsgrad des Elektroantriebes ist gleich dem Quotienten aus der Leistung am Rad des Fahrzeuges zur elektrischen Leistung des Antriebes.

Um bei einer Leistungsreduktion ein sprunghaftes Umschalten von Antriebsstrom auf Nennstrom zu vermeiden, wird die Begrenzung des Antriebstromes vorzugsweise mit einer Zeitkonstanten von wenigen Sekunden (z.B. 10 sec) vorgenommen. Auf diese Weise wird ein Beschleunigungsvorgang nicht abrupt abgebrochen.

Im folgenden sollen theoretische Grundlagen der Erfindung dargelegt und anhand der Zeichnung die Erfindung sowie weitere Ausgestaltungen und Vorteile der Erfindung näher erläutert und beschrieben werden.

Es zeigt:

Fig. 1    Den zeitlichen Verlauf der Geschwindigkeit beim Beschleunigen eines Fahrzeuges,

Fig. 2    den Ablauf eines Verfahrens gemäß Anspruch 2,

Fig. 3    den Ablauf eines Verfahrens gemäß Anspruch 3 und

Fig. 4    eine Schaltungsanordnung zur Durchführung des Verfahrens.

I. Theoretische Grundlagen

Der Leistungsbedarf $P_r$ eines Fahrzeuges am Rad ergibt sich zu

(1)    $P_r = F * v$

mit

$v$    - Geschwindigkeit
$F$    - Fahrwiderstand

Der Fahrwiderstand $F$ ergibt sich aus der Addition von

$F_r$    - Rollwiderstand
$F_{st}$    - Steigungswiderstand
$F_L$    - Luftwiderstand
$F_b$    - Beschleunigungswiderstand und
$F_k$    - Kurvenwiderstand
    (wird im folgenden vernachlässigt).

(2)    $P_r = (F_r + F_{st} + F_L + F_b) * v$

Die einzelnen Widerstände können aus folgenden Gleichungen ermittelt werden:

(3)    $F_r = m * g * f_r$

mit

$m$    - Fahrzeugmasse (kg)
$g$    - 9.81 m/sec$^2$
$f_r$    - Reibbeiwert

(4)    $F_{st} = m * g * \sin \text{Alpha}$

Alpha ist der Steigungswinkel

(5)    $F_L = 0.5 * d * c_w * A * (v \pm v_w)^2$

mit

$d$    - Dichte der Luft = 1.25 kg/m$^3$
$c_w$    - Luftwiderstandszahl
$A$    - Fahrzeugfläche
$v_w$    - Windgeschwindigkeit

Faßt man die Konstanten zu k zusammen, so ergibt sich aus Gleichung (5):

(6)    $F_L = k * (v \pm v_w)^2$

Der Beschleunigungwiderstand $F_b$ setzt sich aus einem translatorischen Anteil und einem rotatorischen Anteil zusammen. Der rotatorische Anteil ergibt sich aus der Summe der auf das Rad bezogenen Trägheitsmomente (Multiplikation mit dem Quadrat der Übersetzungen) multipliziert mit der Beschleunigung b. Der rotatorische Anteil wird in Form eines Massenfaktors c berücksichtigt. Damit ergibt sich der Beschleunigungswiderstand zu

(7)    $F_b = m * (1 + c) * b$

Aus der Messung von Geschwindigkeit v (km/h) und Motordrehzahl n (U/min) sowie dem Reifenhalbmesser r (m) läßt sich die Übersetzung $ü_i$ ermitteln.

(8)    $ü_i = 0.377 * r * n/v$

Enthält der Antrieb ein Wechselgetriebe, so lassen sich den unterschiedlichen Übersetzungen $ü_i$ bekannte Massenzuschlagfaktoren $c_i$ zuordnen
$ü_1 \rightarrow c_1$
$ü_2 \rightarrow c_2$
$ü_3 \rightarrow c_3$ usw.

Aus der Geschwindigkeitsänderung pro Zeiteinheit $(V_2, V_1, t)$ läßt sich die Beschleunigung b ermitteln.

(9)    $b = (v_2 - v_1)/t$

Aus den Gleichungen (7) bis (9) errechnet sich der Beschleunigungswiderstand $F_b$.

Mit den vorstehenden Gleichungen läßt sich der Leistungsbedarf $P_r$ eines Fahrzeuges am Rad prinzipiell aus Konstanten $(m,g,f_r,k,r,c_i)$ und Meßwerten $(v,n, Alpha,v_w)$ bestimmen. Allerdings sind der Steigungswinkel Alpha und die Winkelgeschwindigkeit einer Messung vom Fahrzeug aus nicht ohne weiteres zugänglich. Beide Größen lassen sich jedoch in erster Näherung zu dem Wert eines Scheinsteigungswinkels Alpha zusammenfassen, da sich Gegen- bzw. Rückenwind vom Fahrzeug aus betrachtet wie eine Steigung oder ein Gefälle auswirken.

Die Leistung $P_r$ am Rad ergibt sich auch aus der Messung der Antriebsspannung U und dem Antriebsstrom I zu:

$$(10) \quad U * I * ETA = P_r$$

ETA ist der Gesamtwirkungsgrad des elektrischen Antriebes von der elektrischen Leistungsversorgung bis zum Rad. ETA ist grundsätzlich bei einem Antrieb bekannt und kann über ein Kennlinienfeld als Funktion von Leistung, Drehzahl und Übersetzung vorgegeben werden.

Aus den Gleichungen (2), (4) und (10) ergibt sich der Steigungswinkel Alpha zu:

$$(11) \quad sin\ Alpha = (U * I * ETA - (F_r + F_b) * v - k * v^3)/m * g * v$$

Da diese Gleichung (11) lediglich Konstanten bekannter Größe und Meßgrößen $(I,U,v,n)$ enthält, die im Fahrzeug unmittelbar gewonnen werden können, läßt sich der Steigungswinkel Alpha jederzeit im Fahrzeug ermitteln.

II. Berechnung der höchstzulässigen Dauergeschwindigkeit

Die höchstzulässige Dauergeschwindigkeit $v_D$ des Fahrzeuges stellt sich bei den aktuellen Fahrwiderständen als konstante Geschwindigkeit ein, wenn der Elektroantrieb mit seiner Nennleistung $P_n$ betrieben wird und auf das Fahrzeug keine beschleunigenden oder verzögernden Kräfte einwirken. Aus den Gleichungen (2) bis (6) ergibt sich dann für die Nennleistung $P_n$ , die am Rad ansteht:

$$(12) \quad P_n = I_n * U_n * ETA = (f_r + sin\ Alpha) * m * g * v_D + k * v_D^3$$

mit

$I_n$ - Nennstrom
$U_n$ - Nennspannung

Die Dauergeschwindigkeit $v_D$ läßt sich durch Lösung der Gleichung (12) ermitteln. Zur Lösung der Gleichung (12) kann beispielsweise ein Iterationsverfahren angewendet werden.

III. Begrenzung der Fahrzeuggeschwindigkeit auf $v_D$

Solange die elektrische Leistung des Antriebes unter der Nennleistung $p_n$ liegt, wird der elektrische Antrieb nicht überlastet und ein Verfahren zum Schutz gegen Uberlast braucht nicht einzugreifen. Beim Beschleunigen des Fahrzeuges ist es jedoch häufig erwünscht, die elektrische Leistung über die Nennleistung hinaus zu steigern, um einen erhöhten Beschleunigungseffekt zu erzielen. Die erhöhte Leistung $P_k$ führt zu einer verstärkten und auf Dauer nicht zulässigen Belastung des Elektroantriebes. Sie darf daher nur kurze Zeit zugelassen werden.

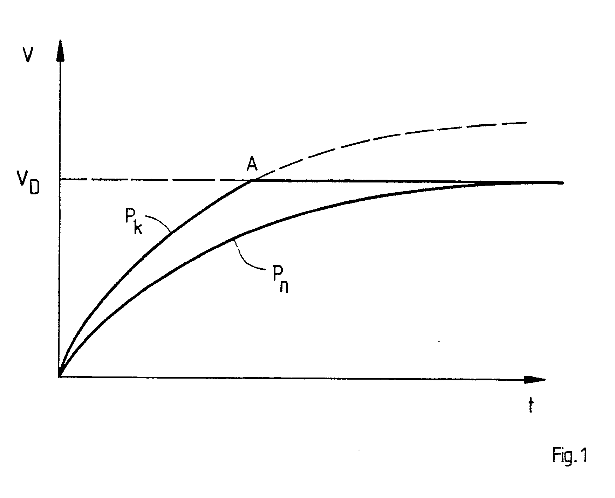

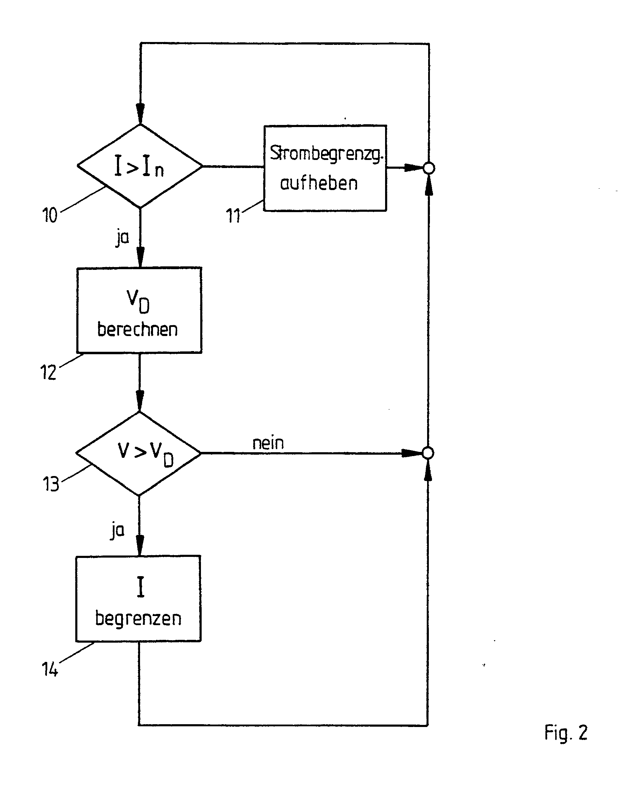

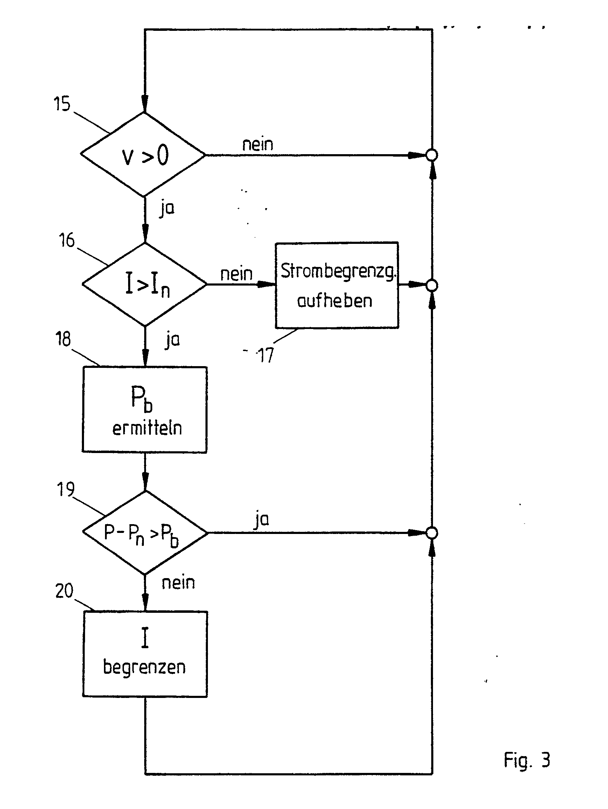

Erfindungsgemäß wird sie dadurch begrenzt, daß eine Geschwindigkeitssteigerung über die Dauergeschwindigkeit $v_D$, die vorstehend definiert wurde, nicht zugelassen wird. Zur näheren Erläuterung dient Fig. 1, die einerseits den zeitlichen Verlauf der Geschwindigkeit bei Beschleunigung unter Nennleistung $P_n$ und andererseits unter einer kurzzeitig zugelassenen Uberleistung $P_k$ zeigt. Bei Nennleistung $P_n$ wird das Fahrzeug bis auf die Dauergeschwindigkeit $v_D$ beschleunigt (Definition). Bei der Uberleistung $P_k$ wird das Fahrzeug stärker beschleunigt. Der Beschleunigungsvorgang wird jedoch zum Zeitpunkt A abgebrochen, um den Antrieb nicht zu überlasten. Der Antrieb wird auf den Nennbetrieb heruntergesteuert, und das Fahrzeug bewegt sich mit seiner Dauergeschwindigkeit $v_D$ weiter. Hierfür werden im folgenden anhand der Figuren 2 und 3 zwei Verfahren beschrieben.

IV. Ausführungsbeispiele für erfindungsgemäße Verfahren

a)
Gemäß Fig. 2 wird zunächst in der Abfrage 10 ermittelt, ob der Strom I des elektrischen Antriebes größer ist als der Nennstrom $I_n$. Ist dies nicht der Fall, so liegt eine Uberlast nicht vor und eine eventuell vorliegende Strombegrenzung wird in der Operation 11 aufgehoben. Die Stromabfrage 10 kann dann in vorgebbaren Zeitabständen wiederholt werden. Ist der gemessene Antriebsstrom I größer als der Nennstrom $I_n$, so wird die Dauergeschwindigkeit $v_D$ in einer Operation 12 anhand der Gleichung (12) berechnet. Die Berechnung kann durch eine entsprechende elektrische Schaltungsanordnung oder einen elektronischen Rechner erfolgen. Anschließend wird in einer weiteren Abfrage 13 festgestellt, ob die Fahrgeschwindigkeit v des Fahrzeuges größer ist als die errechnete Dauergeschwindigkeit $v_D$. Ist dies nicht der Fall, so wird der Abfragezyklus weiderholt. Ist die Fahrgeschwindigkeit v größer als die Dauergeschwindigkeit $v_D$, so wird in einer Operation 14 eine Begrenzung des Antriebsstromes I auf den Nennstrom $I_n$ vorgenommen. Anschließend wird der Abfragezyklus wiederholt.

Die Strombegrenzung in der Operation 14 erfolgt zweckmäßigerweise nicht sprunghaft, sondern ist mit einer Zeitkonstanten von beispielsweise 10 Sekunden behaftet. Hierdurch wird vermieden, daß ein Beschleunigungsvorgang abrupt abgebrochen wird, sobald die Dauergeschwindigkeit $v_D$ erreicht ist.

b)

Auf die unmittelbare Berechnung des Fahrwiderstandes und der Dauergeschwindigkeit $v_D$ kann durch Anwendung des nachfolgend anhand Fig. 3 beschriebenen Verfahrens verzichtet werden. Diesem Verfahren liegt die Überlegung zugrunde, daß dann, wenn die Antriebsleistung P größer ist als die Nennleistung $P_n$, der Leistungsanteil des elektrischen Antriebes, der die Nennleistung übersteigt, kleiner ist als die Beschleunigungsleistung $P_b$ des Fahrzeuges. Ist die Fahrzeuggeschwindigkeit v größer als die vorstehend definierte Dauergeschwindigkeit $v_D$, so ist diese Bedingung nicht mehr erfüllt, so daß eine Strombegrenzung auf den Nennstrom $I_n$ vorgenommen wird.

Diese Zusammenhänge lassen sich aus den Gleichungen (11) und (12) ableiten. Bei Anwendung der Bedingung $v_D$ größer als v ergibt sich dann die Beziehung

(13)     $P_n < U * I * ETA - m * (1 + c_i) * b * v$

Verwendet man die Definitionen

(14)     $P_{elD} * ETA = P_n$ ($P_{elD}$ - elektrische Dauerlei

(15)     $U * I * ETA = P$

(16)     $m * (1 + c_i) * b * v = P_b$

so folgt:

(17)     $U * I - P_{elD} > P_b/ETA$ oder $P - P_n > P_b$

Gemäß Fig. 3 wird zunächst in der Abfrage 15 geprüft, ob das Fahrzeug fährt. Ist dies der Fall, so wird in der Abfrage 16 ermittelt, ob der Strom I des elektrischen Antriebes größer ist als der Nennstrom $I_n$. Ist dies nicht der Fall, so wird das Fahrzeug nicht mit Überlast betrieben und eine eventuell vorliegende Strombegrenzung wird in der Operation 17 aufgehoben. Ist der gemessene Strom I größer als der Nennstrom $I_n$, so wird in einer Operation 18 die Beschleunigungsleistung $P_b$ gemäß Gleichung (16) unter Verwendung der zeitlichen Ableitung (Differentiation) der Fahrgeschwindigkeit v ermittelt. Anschließend erfolgt die Abfrage 19 gemäß der Beziehung (17). Ist die Beziehung (17) erfüllt, so wird der Abfragezyklus wiederholt. Anderenfalls wird durch die Operation 20 der Strom I des elektrischen Antriebes auf den Nennstrom $I_n$ begrenzt. Auch hier ist es zweckmäßig, die Strombegrenzung allmählich vorzunehmen (Zeitkonstante).

Das Verfahren arbeitet unabhängig von allen Störeinflüssen, die außerhalb des Fahrzeuges liegen und nur über Berechnungen ermittelt werden können (Windgeschwindigkeit, Steigung, Kurvenfahrt, Straßenbelag), da diese bei der Differenzenbildung nach Gleichung (17) enthalten sind. Als Informationen dienen Größen, die normalerweise im Fahrzeug gemessen werden.

Unter der Voraussetzung, daß die Dauerleistung auch im Falle der thermischen Leistungsbegrenzung noch zur Verfügung steht, kann eine einmal erreichte Geschwindigkeit immer gehalten werden. Überraschungseffekte können daher vermieden werden.

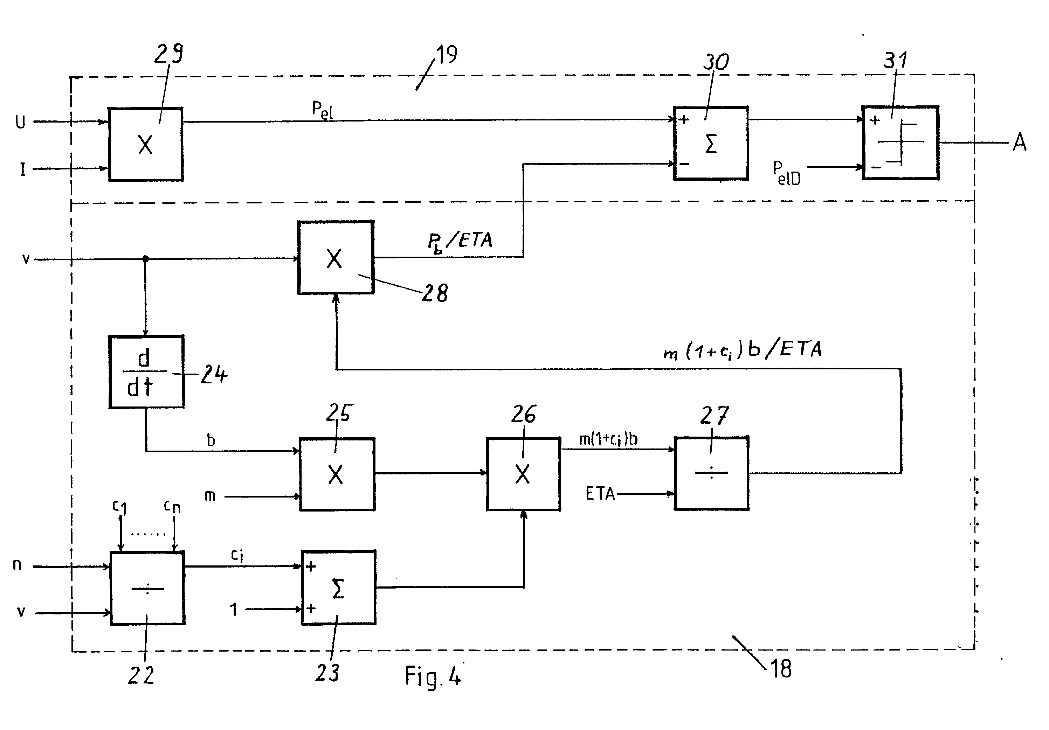

Die Fig. 4 zeigt eine Schaltungsanordnung, durch die die Operation 18 und Abfrage 19 gemäß Fig. 3 realisiert werden.

Aus den Meßwerten der Motordrehzahl n und der Fahrzeuggeschwindigkeit v wird durch den Operator 22 anhand der Gleichung (8) das Übersetzungsverhältnis $ü_i$ bestimmt und der zugehörige Massenzuschlagfaktor $c_i$ ermittelt. In dem Summenbildner 23 wird zum Massenzuschlagfaktor $c_i$ die Zahl 1 addiert.

Im Differenzierer 24 wird aus dem Geschwindigkeitsmeßwert v die Beschleunigung b gebildet, welche im Multiplizierer 25 mit der Fahrzeugmasse m multipliziert wird. In dem nachgeschalteten Multiplizierer 26 wird das Ergebnis des Multipliziers 25 mit dem Ergebnis des Summenbildners 23 multipliziert. Das Ausgangssignal des Multiplizierers 26 wird in dem Dividierglied 27 durch den Wirkungsgrad ETA des elekrischen Antriebes geteilt. Das Ergebnis wird in einem weiteren Multiplizierer 28 mit dem Geschwindigkeitsmeßwert v multipliziert, wodurch ein Signal gewonnen wird, das gleich der Beschleunigungsleistung $P_b$ dividiert durch den Wirkungsgrad ETA ist.

Die Abfrage 19 ist durch einen Multiplizierer 29, ein Summenglied 30 und ein Schwellenglied 31 realisiert. Im Multiplizierer 29 wird aus den Meßwerten von Antriebsstrom I und Antriebsspannung U das Produkt gebildet. Von diesem Produktwert wird im Summierglied 30 der bereits gewonnene Quotient aus Beschleunigungsleistung $P_b$ und Wirkungsgrad ETA subtrahiert. Der Differenzwert wird dem Schwellenglied 31 zugeführt und in diesem mit dem vorgebbaren Wert der maximal zulässigen elektrischen Dauerleistung $P_{elD}$ des elektrischen Antriebes verglichen. Ist der Differenzwert größer als $P_{elD}$, so ist eine Strombegrenzung nicht erforderlich. Diese Information wird über den Ausgang A zur Weiterverarbeitung ausgegeben.

**Patentansprüche**

1. Verfahren zum Schutz des Elektroantriebes eines Fahrzeuges, insbesondere eines Elektroautos, gegen Uberlast bei vorübergehendem Uberschreiten der Nennleistung, dadurch gekennzeichnet, daß die Fahrgeschwindigkeit (v) des Fahrzeuges automatisch derart begrenzt wird, daß eine bei Nennbetrieb des Elektroantriebes sich entsprechend den beschleunigungsunabhängigen Fahrwiderständen ($F_r$, $F_{st}$, $F_L$) ergebende Dauergeschwindigkeit ($v_D$) zu keiner Zeit überschritten werden kann.

2. Verfahren nach Anspruch 1, dadurch gekennzeichnet, daß aus den aktuellen Fahrwiderständen ($F_r$, $F_{st}$, $F_L$) und der Nennleistung ($P_n$) des Elektroantriebes eines maximal zulässige Dauergeschwindigkeit ($v_D$) bestimmt wird, welche mit der aktuell vorliegenden Fahrzeuggeschwindigkeit (v) verglichen wird, und daß eine Reduktion der Antriebsleistung ($P_{el}$) auf den Nennwert ($P_n$) dann erfolgt, wenn die Fahrzeuggeschwindigkeit (v) gleichgroß oder größer als die zulässige Dauergeschwindigkeit ($v_D$) ist.

3. Verfahren nach Anspruch 1, dadurch gekennzeichnet, daß die Fahrzeugleistung dann begrenzt wird, wenn die Differenz zwischen der unter den gegebenen Betriebsbedingungen aufzubringenden elektrischen Leistung (U x I) und der elektrischen Nennleistung ($P_{elD}$) des Antriebes größer wird als die Beschleunigungsleistung des Elektrofahrzeuges dividiert durch den Wirkungsgrad (ETA) des Elektroantriebes.

4. Verfahren nach Anspruch 2 oder 3, dadurch gekennzeichnet, daß zur Begrenzung der Fahrzeugleistung der Antriebsstrom (I) der elektrischen Maschine auf den Nennstrom ($I_n$) begrenzt wird.

5. Verfahren nach Anspruch 2 oder 4, dadurch gekennzeichnet, daß die Begrenzung der Antriebsleistung oder des Antriebsstromes (I) mit einer Zeitkonstanten von wenigen Sekunden vorgenommen wird.

6. Verfahren nach einem der Ansprüche 3 bis 5, dadurch gekennzeichnet, daß bei batteriegespeisten autonomen Straßenfahrzeugen für den Wirkungsgrad (ETA) des Elektroantriebes eine Konstante eingesetzt wird.

**Claims**

1. Method for protecting the electric drive of a vehicle, in particular an electrical automobile, against overload when the rated power is temporarily exceeded, characterized in that the travelling speed (v) of the vehicle is automatically limited in such a way that a continuous speed ($v_D$) obtained at nominal operation of the electric drive corresponding to the travelling resistances dependent on acceleration ($F_r$, $F_{st}$, $F_L$) cannot be exceeded at any time.

2. Method according to Claim 1, characterized in that a maximum permissible continuous speed ($v_D$) is determined from the current travelling resistances ($F_r$, $F_{st}$, $F_L$) and the rated power ($P_n$) of the electric drive, which continuous speed is compared with the currently existing vehicle speed (v), and in that a reduction of the electrical drive power ($P_{el}$) to the rated value ($P_n$) takes place whenever the vehicle speed (v) is equal to or greater than the permissible continuous speed ($v_D$).

3. Method according to Claim 1, characterized in that the vehicle power is limited whenever the difference between the electrical power (U x I) to be provided under the given operating conditions and the rated electrical power ($P_{elD}$) of the drive is greater than the acceleration power of the electrical vehicle divided by the efficiency (ETA) of the electric drive.

4. Method according to Claim 2 or 3, characterized in that the drive current (I) of the electrical machine is limited to the rated current ($I_n$) in order to limit the vehicle power.

5. Method according to Claim 2 or 5, characterized in that the limitation of the drive power or of the drive current (I) is undertaken with a time constant of a few seconds.

6. Method according to one of the Claims 3 to 5, characterized in that in the case of battery supplied independent road vehicles, a constant is inserted for the efficiency (ETA) of the electric drive.

**Revendications**

1. Procédé de protection de la propulsion électrique d'un véhicule, notamment d'une voiture électrique, contre des surcharges en cas de dépassement temporaire de la puissance nominale, caractérisé par le fait que la vitesse (v) du véhicule est limitée automatiquement de manière telle qu'une vitesse de croisière ($v_D$) qui s'installe en fonctionnement nominal de la propulsion électrique en fonction des résistances à l'avancement ($F_r$, $F_{st}$, $F_L$) indépendantes de l'accélération, ne puisse être dépassée à aucun moment.

2. Procédé selon la revendication 1, caractérisé par le fait qu'on détermine, à partir des résistances à l'avancement ($F_r$, $F_{st}$, $F_L$) actuelles et de la puissance nominale ($P_n$) de la propulsion électrique, une vitesse de croisière ($v_D$) admissible maximale qui est comparée avec la vitesse (v) actuelle du véhicule, et qu'on réduit la puissance de propulsion ($P_{el}$) à la valeur nominale ($P_n$) dans le cas où la vitesse (v) du véhicule est égale ou supérieure à la vitesse de croisière ($v_D$) admissible.

3. Procédé selon la revendication 1, caractérisé par le fait qu'on limite la puissance du véhicule lorsque la différence entre la puissance électrique (U x I) à fournir dans les conditions de fonctionnement données et la puissance nominale électrique ($P_{elD}$) de la propulsion est supérieure à la puissance d'accélération du véhicule électrique, divisée par le rendement (ETA) de la propulsion électrique.

4. Procédé selon la revendication 2 ou 3, caractérisé par le fait que pour la limitation de la puissance du véhicule, on limite le courant de propulsion (I) de la machine électrique au courant nominal ($I_n$).

5. Procédé selon la revendication 2 ou 4, caractérisé par le fait que la limitation de la puissance de propulsion ou du courant de propulsion (I) est effectuée avec une constante de temps de quelques secondes.

6. Procédé selon l'une des revendications 3 à 5, caractérisé par le fait que sur des véhicules routiers autonomes à alimentation par batterie, on utilise une constante pour le rendement (ETA) de la propulsion électrique.

Fig. 1

Fig. 2

Fig. 3

Fig. 4

EP 0 270 850 B1